(19) Europäisches Patentamt
European Patent Office
Office européen des brevets

(11) EP 0 717 078 A1

(12) EUROPÄISCHE PATENTANMELDUNG

(43) Veröffentlichungstag:
**19.06.1996 Patentblatt 1996/25**

(51) Int. Cl.[6]: **C08L 77/00**, C08L 33/24

(21) Anmeldenummer: **95119092.5**

(22) Anmeldetag: **05.12.1995**

(84) Benannte Vertragsstaaten:
**BE DE FR GB NL**

(30) Priorität: **14.12.1994 DE 4444378**

(71) Anmelder: **BASF AKTIENGESELLSCHAFT
D-67056 Ludwigshafen (DE)**

(72) Erfinder:
- **Weber, Martin, Dr.
D-67433 Neustadt (DE)**
- **Fisch, Herbert, Dr.
D-67157 Wachenheim (DE)**
- **Pipper, Gunter
D-67098 Bad Dürkheim (DE)**
- **Gottschalk, Axel, Dr.
D-67435 Neustadt (DE)**

(54) **Thermoplastische Formmassen auf der Basis von teilaromatischen Polyamiden und Polymethacrylimiden**

(57) Die vorliegende Erfindung betrifft thermoplastische Formmassen, enthaltend

A) 1 bis 98,5 Gew.-% eines teilaromatischen Copolyamids
B) 1 bis 98,5 Gew.-% eines Polymethacrylimids
C) 0,5 bis 30 Gew.-% einer polymeren Komponente mit OH-Gruppen
D) 0 bis 60 Gew.-% faser- oder teilchenförmige Füllstoffe oder deren Mischungen
E) 0 bis 40 Gew.-% schlagzäh modifizierender Kautschuke
F) 0 bis 40 Gew.-% üblicher Zusatzstoffe und Verarbeitungsmittel.

EP 0 717 078 A1

## Beschreibung

Die vorliegende Erfindung betrifft thermoplastische Formmassen, enthaltend

A) 1 bis 98,5 Gew.-% eines teilaromatischen Copolyamids
B) 1 bis 98,5 Gew.-% eines Polymethacrylimids
C) 0,5 bis 30 Gew.-% einer polymeren Komponente mit OH-Gruppen
D) 0 bis 60 Gew.-% faser- oder teilchenförmige Füllstoffe oder deren Mischungen
E) 0 bis 40 Gew.-% schlagzäh modifizierender Kautschuke
F) 0 bis 40 Gew.-% üblicher Zusatzstoffe und Verarbeitungshilfsmittel.

weiterhin betrifft die vorliegende Erfindung die Verwendung derartiger thermoplastischer Formmassen zur Herstellung von Fasern, Folien und Formkörpern sowie die so erhältlichen Fasern, Folien und Formkörper selbst.

Polymermischungen aus Polyamiden und Polymethacrylimiden sind in einer Reihe von Literaturstellen beschrieben.

Aus US-A 4,415,706 sind beispielsweise Mischungen aus imidisierten Acrylat-Polymeren und aliphatischen Polyamiden bekannt, die im Vergleich zum Polymethacrylimid eine verbesserte Zähigkeit und im Vergleich zum Polyamid eine verbesserte Wärmeformbeständigkeit aufweisen.

Auch in der EP-A 376 747 sind Mischungen aus Polyamiden und Polymethacrylimiden bekannt.

Die in der EP-A 404 346 beschriebenen Formmassen enthalten neben Polymethacrylimiden und aliphatischen Polyamiden noch einen Kern-Schale-Kautschuk als Schlagzähmodifier.

Gegenstand der JP 62/96551 sind Mischungen, die neben Polymethacrylimiden und Polyamiden noch eine Polyolefinkomponente mit sauren Gruppen enthalten.

Schließlich werden in der EP-A 464 561 Mischungen aus Polyamiden, Polymethacrylimiden, Schlagzähmodifier sowie Epoxygruppen enthaltenden Copolymeren beschrieben.

Alle diese bisher bekannten Formmassen sind für den Einsatz bei höheren Temperaturen bei gleichzeitig hoher Luftfeuchtigkeit noch nicht zufriedenstellend.

Aufgabe der vorliegenden Erfindung war es daher, thermoplastische Formmassen auf der Basis von Polyamiden und Polymethacrylimiden zur Verfügung zu stellen, die die vorstehenden Nachteile nicht aufweisen.

Diese Aufgabe wurde erfindungsgemäß durch die thermoplastischen Formmassen gemäß Anspruch 1 gelöst.

Bevorzugte Formmassen dieser Art sind den Unteransprüchen und der nachfolgenden Beschreibung zu entnehmen.

Komponente A

Als Komponente A enthalten die erfindungsgemäßen Formmassen 1 bis 98,5, vorzugsweise 5 bis 94 und insbesondere 10 bis 90 Gew.-% eines teilaromatischen Polyamids, d.h. eines Polyamids, welches teilweise aus Monomeren aufgebaut ist, die einen aromatischen Ring enthalten.

Derartige Polyamide sind dem Fachmann an sich bekannt und in der Literatur beschrieben.

Nachstehend seien nur einige bevorzugte Beispiele für teilaromatische Copolyamide näher erläutert.

Zunächst sind hier teilaromatische Copolyamide zu nennen, die

20 bis 90 Gew.-% Einheiten, die sich von Terephthalsäure und Hexamethylendiamin ableiten,

0 bis 50 Gew.-% Einheiten, die sich von ε-Caprolactam ableiten und

0 bis 60 Gew.-% Einheiten, die sich von Adipinsäure und Hexamethylendiamin ableiten

wobei die beiden letztgenannten Einheiten mindestens 10 Gew.-% der Gesamteinheiten ausmachen, enthalten.

Eine ausführliche Beschreibung wie auch ein bevorzugtes Herstellungsverfahren für derartige Polyamide findet sich in der EP-A 299 444, auf die hier wegen näherer Einzelheiten verwiesen sei.

Ein kommerziell erhältliches Produkt aus dieser Gruppe ist Ultramid® T der BASF Aktiengesellschaft.

Weitere bevorzugte teilaromatische Copolyamide sind solche, die aus

65 bis 85 Gew.-% Einheiten, die sich von Terephthalsäure und Hexamethylendiamin ableiten und

15 bis 35 Gew.-% Einheiten, die sich von Isophthalsäure und Hexamethylendiamin ableiten

oder

50 bis 70 Gew.-% Einheiten, die sich von Terephthalsäure und Hexamethylendiamin ableiten und

10 bis 20 Gew.-% Einheiten, die sich von Adipinsäure und Hexamethylendiamin ableiten und

20 bis 30 Gew.-% Einheiten, die sich von Isophthalsäure und Hexamethylendiamin ableiten,

aufgebaut sind.

Entsprechende Produkte sind unter der Bezeichnung Amodel® im Handel erhältlich.

Als letzte Gruppe bevorzugter Polyamide seien solche erwähnt, die aufgebaut sind aus

$a_1$) 30 bis 44, vorzugsweise 32 bis 40 und insbesondere 32 bis 38 mol-% Einheiten, welche sich von Terephthalsäure ableiten,

$a_2$) 6 bis 25, vorzugsweise 10 bis 21 und insbesondere 12 bis 18 mol-% Einheiten, welche sich von Isophthalsäure ableiten,

$a_3$) 43 bis 49,5, vorzugsweise 46 bis 48,5 und insbesondere 46,3 bis 48,2 mol-% Einheiten, welche sich von Hexamethylendiamin ableiten,

$a_4$) 0,5 bis 7, vorzugsweise 1,5 bis 4 und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten,

wobei die Molprozente der Komponenten $a_1$) bis $a_4$) zusammen 100 % ergeben.

Die Diamineinheiten $a_3$) und $a_4$) werden vorzugsweise etwa äquimolar mit den Dicarbonsäureeinheiten $a_1$) und $a_2$) umgesetzt.

Geeignete Monomere $a_4$) sind vorzugsweise cyclische Diamine der Formel

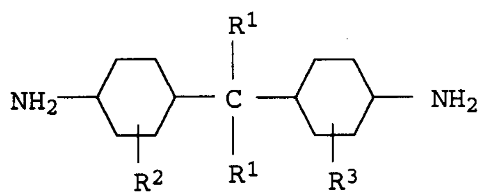

in der

$R^1$ Wasserstoff oder eine $C_1$-$C_4$-Alkylgruppe,
$R^2$ eine $C_1$-$C_4$-Alkylgruppe oder Wasserstoff und
$R^3$ eine $C_1$-$C_4$-Alkylgruppe oder Wasserstoff bedeutet.

Besonders bevorzugte Diamine $a_4$) sind Bis (4-aminocyclohexyl)methan, Bis(4-amino-3-methylcyclohexyl)methan, Bis(4-aminocyclohexyl)-2,2-propan und Bis(4-amino-3-methylcyclohexyl)-2,2-propan.

Als weitere Monomere $a_4$) seien 1,3- und 1,4-Cyclohexandiamin und Isophorondiamin genannt.

Neben den vorstehend beschriebenen Einheiten $a_1$) bis $a_4$) können die teilaromatischen Copolyamide bis zu 20, vorzugsweise bis zu 10 und insbesondere bis zu 4 Gew.-% an weiteren polyamidbildenden Monomeren $a_5$) enthalten, wie sie von anderen Polyamiden bekannt sind.

Aromatische Dicarbonsäuren als Komponente $a_5$) weisen im allgemeinen 8 bis 16 Kohlenstoffatome auf. Geeignete aromatische Dicarbonsäuren sind beispielsweise substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphthalindicarbonsäure und Phenoxyterephthalsäure.

Weitere polyamidbildende Monomere $a_5$) können sich von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin oder Piperazin, als Vertreter der Diamine und Caprolactam, Capryllactam, Önanthlactam, ω-Aminoundecansäure und Laurinlactam als Vertreter von Lactamen bzw. Aminocarbonsäuren genannt.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der letztgenannten teilaromatischen Copolyamide liegen im allgemeinen Bereich von 290°C bis 340°C, bevorzugt von 292 bis 330°C, wobei dieser Schmelzpunkt mit einer hohen Glasübergangstemperatur von in der Regel mehr als 120°C, insbesondere mehr als 130°C (im trockenen Zustand) verbunden ist.

Bevorzugt weisen die teilaromatischen Copolyamide einen Kristallinitätsgrad > 30 %, bevorzugt > 35 %, und insbesondere > 40 % auf.

Der Kristallinitätsgrad ist ein Maß für den Anteil an kristallinen Fragmenten im Copolyamid und wird durch Röntgenbeugung oder indirekt durch Messung von $\Delta H_{krist.}$ bestimmt.

Selbstverständlich können auch Mischungen verschiedener teilaromatischer Copolyamide eingesetzt werden, wobei das Mischungsverhältnis beliebig ist.

Geeignete Verfahren zur Herstellung erfindungsgemäß verwendbarer teilaromatischer Polyamide sind dem Fachmann bekannt.

Als bevorzugte Herstellweise sei der Batch-Prozeß (diskontinuierliche Herstellweise) genannt. Dabei wird die wäßrige Monomerenlösung innerhalb 0,5 bis 3 h in einem Autoklaven auf Temperaturen von 280 bis 340°C erhitzt, wobei ein Druck von 10 bis 50, insbesondere 15 bis 40 bar erreicht wird, der durch Entspannen von überschüssigem Wasserdampf möglichst konstant bis zu 2 h gehalten wird. Anschließend entspannt man den Autoklaven bei konstanter Temperatur innerhalb eines Zeitraumes von 0,5 bis 2 h, bis man einen Enddruck von 1 bis 5 bar erreicht hat. Anschließend wird die Polymerschmelze ausgetragen, abgekühlt und granuliert.

Ein anderes bevorzugtes verfahren erfolgt in Anlehnung an die in den EP-A 129 195 und 129 196 beschriebenen Verfahren.

Gemäß diesen verfahren wird eine wäßrige Lösung der Monomeren $a_1$) bis $a_4$) sowie gegebenenfalls $a_5$) mit einem Monomerengehalt von 30 bis 70, vorzugsweise 40 bis 65 Gew.-% unter erhöhtem Druck (1 bis 10 bar) und unter gleichzeitiger Verdampfung von Wasser und Bildung eines Präpolymeren innerhalb von weniger als 60 s auf eine Temperatur von 280 bis 330°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 280 bis 330°C bei einer Verweilzeit von 5 bis 30 min polykondensiert. Es versteht sich von selbst, daß die Temperatur im Reaktor über dem bei dem jeweiligen Wasserdampf-Druck erforderlichen Schmelzpunkt des entstehenden Präpolymeren liegt.

Durch diese kurzen Verweilzeiten wird die Bildung von Triaminen weitgehend verhindert.

Das so erhaltene Polyamid-Präpolymere, das in der Regel eine Viskositätszahl von 40 bis 70 ml/g, bevorzugt von 40 bis 60 ml/g, gemessen an einer 0,5 gew.-%igen Lösung in 96 %iger Schwefelsäure bei 25°C, aufweist, wird kontinuierlich aus der Kondensationszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf, verwendet wird.

Die Viskositätszahl, gemessen an einer 0,5 gew.-%igen Lösung in 96 %iger Schwefelsäure bei 25°C, liegt nach der Nachkondensation in fester Phase oder den anderen vorstehend genannten Herstellverfahren im allgemeinen im Bereich von 100 bis 500 ml/g, vorzugsweise von 110 bis 200 ml/g.

Komponente B

Als Polyglutarimid B enthalten die erfindungsgemäßen thermoplastischen Formmassen 1 bis 98,5 Gew.-%, vorzugsweise 5 bis 94 Gew.-% eines Polymethacrylimids (= Polyglutarimid).

Dabei handelt es sich im allgemeinen um ein durch Umsetzen von Poly(meth)acrylester mit Ammoniak oder einem primären Amin erhältliches Polymerisat mit einem Imidisierungsgrad von mehr als 70 %.

Dieses Polyglutarimid soll demnach mindestens 70 % Einheiten der allgemeinen Formel I aufweisen; der Rest sind i.a. unveränderte Einheiten des (Meth)acrylsäureesters, der dem Ausgangspolymeren zugrunde liegt.

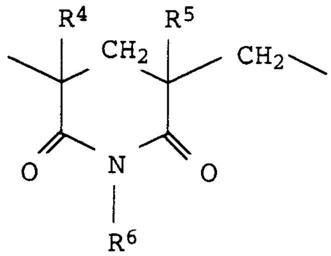

wobei

| | |
|---|---|
| $R^4$ und $R^5$ | unabhängig voneinander Wasserstoff, eine $C_1$-$C_4$-Alkyl oder $C_6$-$C_{18}$-Aryl und |
| $R^6$ | Wasserstoff, $C_1$-$C_8$-Alkyl, $C_5$-$C_{12}$-Cycloalkyl oder $C_6$-$C_{18}$-Aryl |

bedeuten.

Bevorzugte Reste $R^4$ und $R^5$ sind Wasserstoff und die Methylgruppe.

Dies entspricht einem Polymerisat B, welches im wesentlichen aus Monomereinheiten von Methacrylsäureestern und/oder Acrylsäureestern aufgebaut ist und anschließend imidisiert worden ist.

Bevorzugte Reste $R^6$ sind Wasserstoff, eine $C_1$-$C_4$-Alkylgruppe, wobei der Methylrest besonders bevorzugt ist oder eine Cyclohexylgruppe. Bevorzugte Arylreste mit 6 bis 18 Kohlenstoffatomen sind solche, die 1 bis 4 Methylengruppen als Brückenglied zwischen Stickstoff und aromatischem Rest enthalten, wobei der Benzylrest bevorzugt ist.

Außer Acryl- und Methacrylsäureester können die zu imidisierenden Polymerisate in untergeordneter Menge als Bausteine auch andere ethylenisch ungesättigte Monomere enthalten, z.B. imidisierbare Bausteine wie Acrylsäure, (Meth)acrylsäure, Maleinsäureanhydrid, Itaconsäureanhydrid und ferner z.B. (Meth)Acrylnitril, Styrol und dessen kernsubstituierte Alkylderivate, Ethylen, Propylen und Butadien. Die zu imidisierenden Polymerisate können einstufig oder mehrstufig erzeugte Polymerisate sein, wobei bei den zuletzt genannten die letzte Stufe Gruppen enthalten muß, die imidisiert werden können.

Im allgemeinen enthalten die zu imidisierenden Polymerisate mindestens 50 Gew.-%, bevorzugt mehr als 80 Gew.-%, und ganz besonders bevorzugt 95 bis 100 Gew.-% Acryl- und/oder Methacrylsäureester. Bevorzugt sind Ester, bei denen der Esteranteil 1 bis 20 Kohlenstoffatome enthält. Aus wirtschaftlichen Gründen und wegen seiner leichten Zugänglichkeit ist Methylmethacrylat besonders bevorzugt. Gut brauchbar sind aber auch Polymerisate aus Monomersystemen, die neben Comonomeren mindestens 80 Gew.-% Methylmethacrylat enthalten.

Das mittlere Molekulargewicht (Gewichtsmittel) der als Ausgangsstoffe in Betracht kommenden Polymerisate wird nach DIN 7745 Teil 1 bestimmt. Die Viskositätszahl VZ von PMMA-Formmassen wird wie üblich nach DIN 7745 Teil 2 (2,6 g/l in $CHCl_3$ bei 25°C) bestimmt und beträgt zweckmäßig 30 bis 100 ml/g, bevorzugt 50 bis 80 ml/g.

Die Polymerisate B mit Imidgruppen können in Anlehnung an die in den US-A 4 246 374 und EP-A 234 726 beschriebenen Verfahren erhalten werden. Dabei handelt es sich um eine polymeranaloge Umsetzung mit geeigneten primären Aminen $R^6NH_2$ oder Ammoniak:

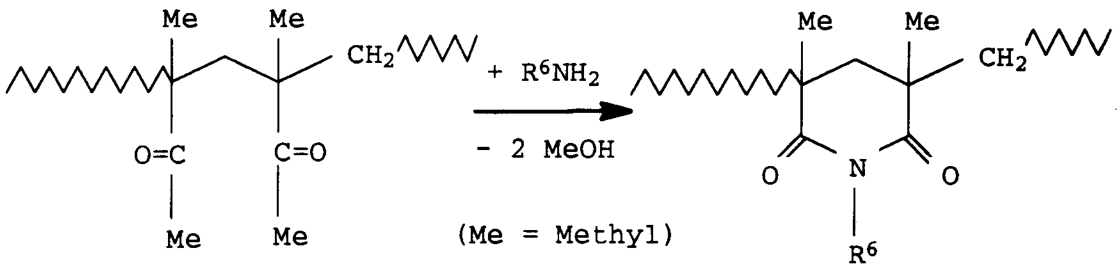


Wegen ihrer leichten Zugänglichkeit sind Ammoniak und Methylamin die am meisten bevorzugten Verbindungen der Formel $R^3NH_2$, doch können auch andere Amine mit gutem Erfolg benutzt werden. Andere geeignete Amine sind beispielsweise Ethyl-, n-Propyl-, n-Butyl-, Heptyl-, Hexyl-, Octyl-, Nonyl-, Decyl-, Dodecyl-, Hexadecyl-, Octadecyl-, Isobutyl-, sec. -Butyl-, t-Butyl, Isopropyl-, 2-Ethyl-hexyl-, Phenethyl-, Allyl-, Benzyl-, para-Chlorbenzyl- und Dimethoxyphenethyl-Amin; ferner Alanin, Glycin, 3'-Aminoacetophenon, 2-Aminoanthrachinon und p-Aminobenzoesäure sowie alkylsubstituierte Cyclohexylamine wie Trimethylcyclohexylamin.

Weitere geeignete Amine sind Cyclohexylamin, 2-Amino-4,6-dimethylpyridin, 3-Aminophthalimid, 2-Aminopyrimidin, 2-Aminothiazol, 5-Amino-1-H-tetrazol, Anilin, Bromanilin, Dibromanilin, Tribromanilin, Chloranilin, Dichloranilin, Trichloranilin, p-Phenetidin und p-Toluidin.

Der Gehalt des Polyglutarimids B an Imidgruppen (Imidisierungsgrad) beträgt im allgemeinen wenigstens 70, insbesondere 80 bis 95 % und ist nach folgender Gleichung berechenbar:

$$\text{Imidisierungsgrad [\%]} = \frac{\text{N-Gehalt aus der Elementaranalyse}}{\text{theoretischer N-Gehalt bei 100 \% Imidisierung}} \times 100\ \%$$

Für den Fall eines Imidisierungsgrades von 100 % bildet die Glutarimidstruktur die alleinigen wiederkehrenden Einheiten in der Polymerkette.

Komponente C

Als Komponente C enthalten die erfindungsgemäßen Formmassen eine polymere Komponente mit Hydroxylgruppen. Die durchgeführten Versuche ergaben, daß prinzipiell jede Gruppe mit Protonendonatoreigenschaften geeignet sein sollte, daß sich jedoch Gruppen mit der Struktureinheit -OH besonders gut eignen. Die verträglichkeitsverbessernde Wirkung der Komponente C beruht aller Wahrscheinlichkeit nach darauf, daß zwischen der Komponente C und den Komponenten A und B Wechselwirkungen, zum Beispiel H-Brückenbindungen auftreten, die eine bessere Haftung der Phasen aneinander bewirken.

Wir bereits erwähnt, sind prinzipiell alle Polymere mit Hydroxylgruppen, die im wesentlichen frei zur Verfügung stehen, geeignet. Es ist natürlich darauf zu achten, daß die Komponenten A und B gegenüber der Komponente C stabil sind. Dies ist insbesondere bei Verwendung von Verbindungen mit sauren -OH-Gruppen zu beachten.

Unter Beachtung dieser Voraussetzungen haben sich einige Gruppen von Verbindungen als besonders vorteilhaft herausgestellt, die nachfolgend beschrieben werden. Es ist jedoch grundsätzlich möglich, auch andere Komponenten C einzusetzen, solange die Stabilität der Komponenten A und B nicht darunter leidet.

Die erste Gruppe besonders geeigneter Polymerer sind Polykondensate aus aliphatischen oder aromatischen Diolen oder höherwertiger Alkohole mit Epihalogenhydrinen. Derartige Verbindungen und Verfahren zu ihrer Herstellung sind dem Fachmann an sich bekannt, weshalb sich hier nähere Angaben erübrigen. Grundsätzlich sind aliphatische oder aromatische Diole geeignet. Besonders bevorzugte Dihydroxiverbindungen sind die für die Herstellung von Polycarbonaten eingesetzten Diole.

Wegen der leichten Zugänglichkeit wird ein Polykondensat aus Bisphenol A und Epichlorhydrin mit der Struktur

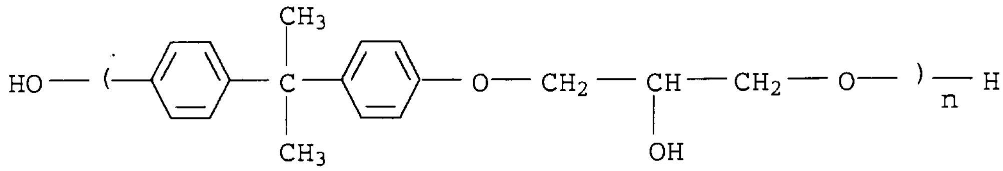

bevorzugt verwendet.

Neben der Möglichkeit der Verwendung von Polymeren, die bereits in der Hauptkette die Hydroxylgruppe aufweisen, ist es auch möglich, Polymere oder Copolymere zu verwenden, die diese funktionellen Gruppen durch die Mitverwendung geeigneter Monomerer bei der Polymerisation erhalten, wobei die Gruppen dann in den Polymeren ebenfalls in der Hauptkette, aber auch in Substituenten der Hauptkette vorhanden sein können. Eine weitere Möglichkeit besteht in der Aufpfropfung von geeigneten Monomeren mit OH-Gruppen auf Pfropfgrundlagen, wobei prinzipiell alle Polymere als Pfropfgrundlagen geeignete sind, die mit den Komponenten A und B nicht vollkommen unverträglich sind. Ein gewisser Grad an Unverträglichkeit kann durch eine Erhöhung des Anteils der Hydroxylgruppen ausgeglichen werden.

Geeignete Komponenten C sind daher z.B. Polymere auf der Basis von Polyolefinen, Polystyrol und Kautschukelastomeren, die Hydroxylgruppen -OH aufweisen, die entweder durch Verwendung geeigneter Comonomerer oder aber durch Aufpfropfung der funktionellen Gruppen -OH erhältlich sind. Der Anteil der Co- oder Pfropfmonomeren mit Hydroxylgruppen -OH ist abhängig davon, wie gut verträglich das Basispolymere mit den Komponenten A und B ist. Je besser die Verträglichkeit, desto geringer kann der Anteil der OH-Gruppen sein. Aus dem Vorstehenden ergibt sich, daß eine Vielzahl von Polymeren als Komponente C geeignet sind, von denen nachfolgend nur als Beispiel einige besonders bevorzugte Arten näher vorgestellt werden.

Die erste Gruppe sind Polymere und Copolymere mit einem Gehalt von bis zu 100 Mol-% Vinylphenylcarbinolen, wobei sich Vinylphenyldimethylcarbinole und insbesondere Vinylphenylhexafluorodimethylcarbinol als besonders geeignet erwiesen haben. Als Basispolymere oder Pfropfgrundlage eignen sich wiederum vorteilhaft die vorstehend genannten Arten von Polymeren.

Als zweite Gruppe seien die Polymeren und Copolymeren dieser Gruppe mit Vinylphenolen genannt, die im Kern auch Substituenten enthalten können. Substituenten, die die Acidität des phenolischen Wasserstoffs erhöhen, sind besonders geeignet, so z.B. Halogensubstituenten, aber auch andere elektronenanziehende Substituenten.

Als dritte Gruppe seien die Phenol-Formaldehyd-Polykondensate genannt, soweit sie unvernetzt und löslich sind. Diese Produkte können linear oder verzweigt sein.

Daneben sind grundsätzlich Polymere und Copolymere mit allen polymerisierbaren oder pfropfbaren Alkoholen zu nennen.

Es sei erwähnt, daß Polymere mit OH-Hydroxylgruppen auf der Basis von Polyamiden oder Polyglutarimiden besonders bevorzugt sind, da hier die Verträglichkeit mit mindestens der Komponente A oder B von vornherein gegeben ist, so daß der Anteil der OH-Gruppen gesenkt werden kann.

Die Herstellung der Komponente C kann nach üblichen Verfahren zur Polykondensation bzw. Pfropf- oder Copolymerisation erfolgen, weshalb sich hier nähere Angaben erübrigen.

Der Anteil der Komponente C an den erfindungsgemäßen Formmassen liegt im Bereich von 0,5 bis 30 Gew.-%, bezogen auf das Gesamtgewicht der Komponenten A bis E und hängt von der Verträglichkeit des Basispolymeren mit den Komponenten A und B ab. Im allgemeinen haben sich Anteile von 1 bis 25, insbesondere von 3 bis 20 Gew.-% als besonders vorteilhaft herausgestellt.

Komponente D

Neben den Komponenten A, B und C können die erfindungsgemäßen Formmassen noch weitere Verstärkungs- oder Füllstoffe enthalten, der Anteil dieser Stoffe kann dabei bis 60, vorzugsweise bis 45 und insbesondere 10 bis 40 Gew.-% betragen.

Als teilchenförmige Füllstoffe eignen sich amorphe Kieselsäure, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin) sowie Ruß.

Als faserförmige Verstärkungsstoffe sind Kaliumtitanatwhisker, Aramidfasern und insbesondere Glasfasern zu nennen. Bei der Verwendung von Glasfasern können diese zur besseren Verträglichkeit mit dem Matrixmaterial mit einer Schlichte und einem Haftvermittler ausgerüstet sein.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,04 bis 0,5 mm.

Bevorzugte Kombinationen von Füllstoffen sind z.B. 5 bis 30 Gew.-% Wollastonit oder Talkum mit 1 bis 10 Gew.-% Glasfasern.

Komponente E

Neben den Komponenten A bis D können die erfindungsgemäßen Formmassen auch bis zu 40, vorzugsweise bis 25 Gew.-% eines schlagzähmodifizierenden Kautschuks E enthalten.

Bevorzugte kautschukelastische Polymerisate sind Polymerisate auf Basis von Olefinen, die aus folgenden Komponenten aufgebaut sind:

$e_1$) 40 bis 100 Gew.-% mindestens eines $\alpha$-Olefins mit 2 bis 8 C-Atomen

$e_2$) 0 bis 50 Gew.-% eines Diens

$e_3$) 0 bis 45 Gew.-% eines $C_1$-$C_{12}$-Alkylesters der Acrylsäure oder Methacrylsäure oder Mischungen derartiger Ester,

$e_4$) 0 bis 40 Gew.-% einer ethylenisch ungesättigen Mono- oder Dicarbonsäure oder einem funktionellen Derivat einer solchen Säure

$e_5$) 0 bis 40 Gew.-% eines Epoxygruppen enthaltenden Monomeren,

$e_6$) 0 bis 5 Gew.-% sonstiger radikalisch polymerisierbarer Monomerer, mit der Maßgabe, daß die Komponente C kein Olefinhomopolymerisat ist.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI+4/100°C) solcher, vorzugsweise unvernetzter, EPM- bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere $e_2$) für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethyliden-norbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von $\alpha$-Olefinen mit 2-8 C-Atomen, insbesondere des Ethylens, mit $C_1$-$C_{18}$-Alkylestern der Acrylsäure und/oder Methacrylsäure.

Grundsätzlich eignen sich alle primären und sekundären $C_1$-$C_{18}$-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-Butyl, i-Butyl- und 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester $e_3$) an den Olefinpolymerisaten beträgt 0-60, vorzugsweise 10-50 und insbesondere 30-45 Gew.-%.

Anstelle der Ester $e_3$) oder zusätzlich zu diesen können in den Olefinpolymerisaten auch säurefunktionelle und/oder latent säurefunktionelle Monomere ethylenisch ungesättigter Mono- oder Dicarbonsäuren $e_4$) oder Epoxygruppen aufweisende Monomere $e_5$) enthalten sein.

Als Beispiele für Monomere $e_4$) seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre $C_1$-$C_{12}$-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I-IV zum Monomerengemisch in die Olefinpolymerisate eingebaut

$$R^7C(COOR^8)=C(COOR^9)R^{10} \qquad (I)$$

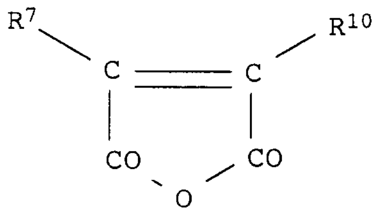

(II)

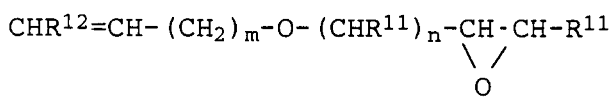

(III)

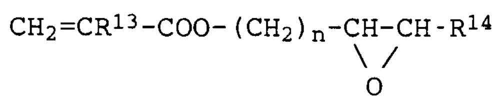

(IV)

wobei die Reste $R^7$ - $R^{14}$ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für $R^7$ - $R^{12}$ ist Wasserstoff, für m der Wert 0 oder 1 und für n der Wert 1. Die entsprechenden Verbindungen sind Maleinsäure, Fumarsäure, Maleinsäureanhydrid, $e_4$) bzw. Alkenylglycidylether oder Vinylglycidylether $e_5$).

Bevorzugte Verbindungen der Formeln I, II, III und IV sind Maleinsäure und Maleinsäureanhydrid als Komponente $e_4$) und Epoxygruppen-enthaltende Ester der Acrylsäure und/oder Methacrylsäure, wobei Glycidylacrylat und Glycidylmethacrylat (als Komponente $e_5$) besonders bevorzugt werden.

Der Anteil der Komponenten $e_4$) bzw. $e_5$) beträgt jeweils 0,07 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus

| | |
|---|---|
| 50 bis 98,9 | insbesondere 60 bis 95 Gew.% Ethylen, |
| 0,1 bis 20, | insbesondere 0,15 bis 15 Gew.% Glycidylacrylat und/oder Glycidylmethacrylat, Acrylsäure und/oder Maleinsäureanhydrid, |
| 1 bis 45, | insbesondere 10 bis 35 Gew.% n-Butylacrylat und/oder 2-Ethylhexylacrylat. |

Weitere bevorzugte Ester der Acryl- und/oder Methacrylsäure sind die Methyl-, Ethyl-, Propyl- und i-Butylester.

Als sonstige Monomere $e_6$) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Außer den vorstehenden bevorzugten kautschukelastischen Polymerisaten auf Basis von Olefinen eignen sich als Elastomere E beispielsweise Emulsionspolymerisate, deren Herstellung z.B. in Houben-Weyl, Methoden der organischen Chemie, Band XII. I (1961) sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomere für die Herstellung der Elastomeren seien Acrylate wie n-Butylacrylat und 2-Ethylhexylacrylat, entsprechende Methacrylate, sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Vorteilhaft ist die Verwendung von Emulsionspolymerisaten, die an der Oberfläche reaktive Gruppen aufweisen. Derartige Gruppen sind z.B. Epoxy-, Carboxyl-, latente Carboxyl-, Amino- oder Amidgruppen.

Auch die in der EP-A 208 187 beschriebenen Pfropfmonomeren sind zur Einführung reaktiver Gruppen an der Oberfläche geeignet.

Weiterhin können die Emulsionspolymerisate ganz oder teilweise vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können pfropfvernetzende Monomere verwendet werden, d.h. Monomere mit zwei oder mehr polymerisierbaren Doppelbindungen, die bei der Polymerisation mit unterschiedlichen Geschwindigkeiten reagieren.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente E bis zu 5 Gew.%, vorzugsweise nicht mehr als 3 Gew.%, bezogen auf E.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere und Pfropfpolymerisate mit einem inneren Kern aus n-Butylacrylat und einer äußeren Hülle aus den vorstehend genannten Copolymeren.

Die beschriebenen Elastomere E können auch nach anderen üblichen Verfahren, z.B. durch Suspensionspolymerisation, hergestellt werden.

Des weiteren können auch Pfropfkautschuke auf siloxan-Basis verwendet werden.

Geeignete Siloxankerne können beispielsweise ausgehend von cyclischen oligomeren Octamethyltetrasiloxan oder Tetravinyltetramethyltetrasiloxan hergestellt werden. Diese können beispielsweise mit $\gamma$-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, $\alpha$-Methylstyrol und deren Copolymerisaten ab, wobei hier als Comonomere vorzugsweise Acrylnitril, Methacrylnitril und Methylmethacrylat aufzuführen sind.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Geeignete Schlagzähmodifier sind auch thermoplastische Polyurethan-Elastomere. Deren Herstellung ist dem Fachmann bekannt.

Selbstverständlich können auch Mischungen verschiedener Kautschuke eingesetzt werden.

Neben den wesentlichen Komponenten A, B sowie gegebenenfalls C, D und E können die erfindungsgemäßen Formmassen übliche Zusatzstoffe und Verarbeitungshilfsmittel F enthalten. Deren Anteil beträgt im allgemeinen bis zu 40, vorzugsweise bis zu 15 Gew.-%, bezogen auf das Gesamtgewicht der Komponenten A bis E.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 $PbCO_3.Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu(Cr,Fe)_2O_4$), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Die Halogenide, insbesondere des Kupfers, können auch noch elektronenreiche $\pi$-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banburry-Mühlen sowie Knetern mischt und anschließend extrudiert. Üblicherweise wird das Extrudat nach der Extrusion abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 270 bis 360°C erforderlich.

Die erfindungsgemäßen Formmassen zeichnen sich durch hohe Steifigkeit bei Temperaturen oberhalb von 80°C sowie sehr gute mechanische Eigenschaften aus. Aufgrund der genannten Eigenschaften sind die erfindungsgemäßen Formmassen insbesondere geeignet zur Herstellung von Formteilen für den Elektro- und Elektronikbereich sowie Fahrzeug- und Apparatebau.

Beispiele

Herstellung der Komponenten $A_{1-6}$

Die Herstellung der als Komponente A verwendeten teilaromatischen Copolyamide wird im folgenden ausführlich beschrieben, die Zusammensetzung der Produkte kann Tabelle 1 entnommen werden. Als relatives Maß für den Kristallinitätsgrad wurde die spezifische Schmelzwärme $\Delta^H$krist. mittels Differential Scanning Calometrie (DSC 9900, Fa. Du Pont) bei einer Aufheizrate von 20°C/min bestimmt.

Komponente $A_1$

Eine 60 %ige wäßrige Lösung, bestehend aus Terephthalsäure, Isophthalsäure, Hexamethylendiamin bzw. Bis(4-amino-3-methylcyclohexyl)methan bder Bis(4-aminocyclohexyl)methan wurde in den in der Tabelle angegebenen Mengenverhältnissen aus einem beheizten Vorratsbehälter bei ca. 80°C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 326°C hatte, bei kräftiger Umwälzung beheizt. Der Verdampfer hatte eine Länge von 3 m und einen Inhalt von 180 ml und eine wärmeübertragende Oberfläche von etwa 1300 $cm^2$. Die Verweilzeit im Verdampfer betrug 50 s. Das aus dem Verdampfer austretende Gemisch aus Präpolymeren und Wasserdampf hatte eine Temperatur von 310°C und wurde in einem

Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,05 Gew.-%. Als Kolonnensumpf erhielt man eine wäßrige Lösung von Hexamethylendiamin, die 80 Gew.-% Hexamethylendiamin, jeweils bezogen auf erzeugtes Polyamid enthielt. Diese Lösung wurde über eine Pumpe wieder vor dem Eintritt in den Verdampfer der Ausgangssalzlösung zugegeben.

Nach Austritt der Polymerschmelze aus dem Abscheider hatte das Polyamid eine sehr helle Eigenfarbe und eine Viskositatszahl von 48 ml/g (gemessen als 0,5 %ige Lösung bei 25°C in 96 gew.-%iger $H_2SO_4$ gemäß DIN 53 246).

Das Produkt wies in etwa eine Äquivalenz von Carboxyl- und Aminoendgruppen auf.

Im Austragsextruder wurde die Schmelze dann auf Normaldruck entspannt und bei einer Verweilzeit von weniger als 1 Minute praktisch nicht mehr weiter kondensiert.

Anschließend wurden die Produkte in fester Phase in einem feststehenden Temperrohr (doppelwandiges, von außen mit Öl auf Temper-Temperatur beheiztes Glasrohr von 120 mm Innendurchmesser und 1000 mm Länge, das mit überhitztem Wasserdampf mit 120 l/min durchströmt ist) bei 200°C diskontinuierlich auf eine Viskositätszahl von 112 ml/g getempert. Die Verweilzeit betrug 8 bis 18 h. Im Verlauf dieser Temperung wurde gegebenenfalls auch ein Großteil der extrahierbaren Restmonomere vom Wasserdampf extrahiert.

Komponente $A_2$

In einem 5 l Laborautoklaven wurden 2 kg einer Monomermischung entsprechend Beispiel 1 mit 700 ml Wasser vorgelegt. Die Mischung war in 5 Glasröhren zu je 800 ml Inhalt verteilt. Der Autoklav wurde 1 h auf 350°C aufgeheizt, wobei der resultierende Wasserdampfdruck nach Erreichen von 20 bar durch Entspannen überschüssigen Wassers konstant gehalten wurde. Danach wurden Temperatur und Druck noch 1 h konstant gehalten. Anschließend wurde auf 330°C abgekühlt und der Autoklav auf Normaldruck entspannt. Die Heizung des Autoklaven wurde abgeschaltet, wobei nach ca. 3 h Raumtemperatur erreicht war.

Die Glasröhren wurden aus dem Autoklaven entnommen und deren Inhalt grob gemahlen. Das erhaltene Produkt wurde in fester Phase bei 198°C unter Stickstoff 10 h auf eine Viskositätszahl von 115 ml/g nachkondensiert.

Komponente $A_3$

In einem 10 l Laborautoklaven wurden 3 kg einer Monomermischung, die das in der Tabelle aufgeführte Polymer ergaben, mit 2500 ml Wasser vorgelegt. Die Herstellung und Aufarbeitung erfolgte wie bei Komponente $A_2$. Das Copolyamid wies nach der Nachkondensation in fester Phase unter Stickstoff bei 196°C (10 h) eine VZ von 114 ml/g auf.

Komponente A/V

Aliphatisches Polyamid aus 1,6-Diaminohexan und Adipinsäure mit einem K-Wert (nach Fikentscher) von 76; entsprechend einer relativen Viskosität $\eta_{rel}$ von 2,95, gemessen in 1 Gew.-%iger Lösung in 96 %iger Schwefelsäure bei 25°C.

Komponenten $B_1$ und $B_2$

Es wurden handelsübliche Poly-N-methyl-glutarimide eingesetzt, die durch folgende Angaben charakterisiert sind:

| | $B_1$ | $B_2$ |
|---|---|---|
| Imidisierungsgrad | 74 % | 87 % |
| Glastemperatur Tg | 144°C | 160°C |
| Vicat B | 135°C | 150°C |
| VZ | 82 ml/g | 70 ml/g |

Komponente C

Kondensationsprodukt aus Bisphenol A und Epichlorhydrin mit einer relativen Viskosität von 1,13, gemessen an einer 0,5 gew.-%igen Lösung in Dichlormethan bei 23°C (Phenoxy® der Union Carbide Corporation).

Komponente E

Ethylen-Propylen-Kautschuk mit 0,7 Gew.-% Maleinsäureanhydrid gepfropft, gekennzeichnet durch einen Schmelzindex von 3 g/10 min, gemessen bei 2,16 kg, 230°C (Handelsprodukt Exxelor VA/1803 der Firma Exxon).

Tabelle 1

| Zusammensetzung der eingesetzten teilaromatischen Copolyamide | | | | |
|---|---|---|---|---|
| | | $A_1$ | $A_2$ | $A_3$ |
| Hexamethylendiamin | mol-% | 48,1 | 48,1 | 46,2 |
| | Gew.-% | 39,1 | 39,1 | 36,9 |
| Terephthalsäure | mol-% | 32,2 | 32,2 | 29,5 |
| | Gew.-% | 37,5 | 37,5 | 34,0 |
| Isophthalsäure | mol-% | 17,8 | 17,8 | 20,5 |
| | Gew.-% | 20,6 | 20,6 | 23,6 |
| Bis(4-aminocyclohexyl)methan | mol-% | 1,9 | 1,9 | 3,8 |
| | Gew.-% | 2,8 | 2,8 | 5,5 |
| $\Delta^{H}$krist. | [J/g] | 54 | 52 | 32 |

Die einzelnen Komponenten in den nachfolgenden Beispielen wurden in einem Zweiwellenextruder bei einer Massetemperatur vom 300 bis 340°C gemischt. Die Schmelze wurde durch ein Wasserbad geleitet und granuliert.

Das getrocknete Granulat wurde bei 300 bis 340°C zu Zugstäben, Rundscheiben und Normkleinstäben verarbeitet.

Die Steifigkeit (E-Modul) und Reißdehnung der Blends wurde durch einen Zugversuch nach DIN 53 455 an Schulterstäben bei 23°C bestimmt. Des weiteren wurde die Steifigkeit der mit Feuchtigkeit gesättigten Proben bei 80°C bestimmt.

Die Kerbschlagzähigkeit der Blends wurde nach DIN 53 353 an Normkleinstäben bestimmt. Die Schädigungsarbeit der Proben wurde nach DIN 53 443 an Rundscheiben bestimmt.

Die Vicat B-Wärmeformbeständigkeit der Blends wurde nach DIN 53 460 an Normkleinstäben ermittelt.

Die Zusammensetzung der Formmassen und die Ergebnisse der Prüfungen sind den Tabellen 2 und 3 zu entnehmen.

Tabelle 2

| Beispiel Nr. | 1V | 2V | 3V | 4V | 1 | 2 | 5V |
|---|---|---|---|---|---|---|---|
| Komponente [Gew.-%] | | | | | | | |
| $A_1$ | 50 | - | - | - | 47,5 | - | - |
| $A_2$ | - | 50 | - | - | - | 47,5 | - |
| $A_3$ | - | - | 50 | - | - | - | 47,5 |
| A/V | - | - | - | 50 | - | - | - |
| $B_1$ | 50 | 50 | 50 | 50 | 47,5 | 47,5 | 47,5 |
| C | - | - | - | - | 5 | 5 | 5 |
| Eigenschaften: | | | | | | | |
| E [N/mm$^2$] bei RT | 3650 | 3650 | 3400 | 3450 | 3400 | 3370 | 3100 |
| $\varepsilon$R [%] | 2,7 | 2,6 | 2,4 | 2,5 | 21 | 22 | 18 |
| E [N/mm$^2$] bei 80°C | 2400 | 2350 | 1700 | 800 | 2300 | 2260 | 1550 |
| $a_k$ [kJ/m$^2$] | 2,0 | 2,1 | 1,8 | 1,8 | 6,5 | 7,0 | 5,9 |
| $W_s$ [Nm] | 0,2 | 0,1 | 0,1 | 0,1 | 27 | 25 | 21 |
| V: Vergleichsbeispiele | | | | | | | |

Tabelle 3

| Beispiel Nr. | 6V | 3 | 4 | 5 |
|---|---|---|---|---|
| Komponente [Gew.-%] | | | | |
| $A_1$ | 50 | 49 | 47,5 | 45 |
| $B_2$ | 50 | 49 | 47,5 | 45 |
| C | - | 2 | 5 | 5 |
| E | - | - | - | 5 |
| Eigenschaften: | | | | |
| E [N/mm$^2$] bei RT | 3850 | 3700 | 3600 | 3450 |
| $\varepsilon$R [%] | 2,4 | 11 | 20 | 26 |
| E [N/mm$^2$] bei 80°C | 2650 | 2500 | 2400 | 2300 |
| $a_k$ [kJ/m$^2$] | 2,0 | 4,2 | 6,4 | 12 |
| $W_s$ [Nm] | 0,1 | 16 | 24 | 34 |
| V: Vergleichsbeispiele | | | | |

Die Ergebnisse zeigen, daß erst durch die gemeinsame Verwendung eines teilaromatischen Copolyamids in der beanspruchten Zusammensetzung die gewünschte Eigenschaftskombination erzielt wird.

## Patentansprüche

**1.** Thermoplastische Formmassen, enthaltend

A) 1 bis 98,5 Gew.-% eines teilaromatischen Copolyamids

B) 1 bis 98,5 Gew.-% eines Polymethacrylimids
C) 0,5 bis 30 Gew.-% einer polymeren Komponente mit OH-Gruppen
D) 0 bis 60 Gew.-% faser- oder teilchenförmige Füllstoffe oder deren Mischungen
E) 0 bis 40 Gew.-% schlagzäh modifizierender Kautschuke
F) 0 bis 40 Gew.-% üblicher Zusatzstoffe und Verarbeitungshilfsmittel.

**2.** Thermoplastische Formmassen nach Anspruch 1, enthaltend als Komponente A ein teilaromatisches Copolyamid aufgebaut aus

$a_1$) 30 bis 44 mol-% Einheiten, welche sich von Terephthalsäure ableiten

$a_2$) 6 bis 25 mol-% Einheiten, welche sich von Isophthalsäure ableiten

$a_3$) 43 bis 49,5 mol-% Einheiten, welche sich von Hexamethylendiamin ableiten

$a_4$) 0,5 bis 7 mol-% Einheiten, welche sich von aliphatischen cyclischen Diaminen mit 6 bis 30 C-Atomen ableiten

wobei die Molprozente der Komponenten $a_1$) bis $a_4$) zusammen 100 % ergeben.

**3.** Thermoplastische Formmassen nach einem der Ansprüche 1 bis 2, enthaltend als Komponente C ein Polykondensat aus aliphatischen oder aromatischen mehrwertigen Alkoholen mit Epihalogenhydrinen.

**4.** Verwendung der thermoplastischen Formmassen gemäß einem der Ansprüche 1 bis 3 zur Herstellung von Fasern, Folien und Formkörpern.

**5.** Fasern, Folien und Formkörper, erhältlich aus thermoplastischen Formmassen gemäß einem der Ansprüche 1 bis 3.

Europäisches Patentamt

# EUROPÄISCHER RECHERCHENBERICHT

Nummer der Anmeldung
EP 95 11 9092

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
| A | EP-A-0 438 239 (ROHM & HAAS)<br>* Seite 13, Zeile 6 - Zeile 7; Ansprüche 1,8,9; Beispiel 15; Tabelle 4 *<br>* Seite 5, Zeile 51 - Zeile 53 *<br>--- | 1,3-5 | C08L77/00<br>C08L33/24 |
| A | EP-A-0 373 911 (ROHM & HAAS)<br>* Seite 7, Zeile 4 - Zeile 7; Beispiele 89-100 *<br>--- | 1,4,5 | |
| A | DATABASE WPI<br>Section Ch, Week 9146<br>Derwent Publications Ltd., London, GB;<br>Class A23, AN 91-337371<br>ANONYMOUS 'Blends of polyamide, poly-glutarimide and EVA copolymer - with good processability, clarity and barrier properties'<br>* Zusammenfassung *<br>& RESEARCH DISCLOSURE,<br>Bd. 330, Nr. 063, 10.Oktober 1991<br>EMSWORTH, GB,<br>--- | 1,4,5 | RECHERCHIERTE SACHGEBIETE (Int.Cl.6) |
| A | US-A-5 344 868 (M. HALLDEN-ABBERTON ET AL.)<br>* Ansprüche 1,4 *<br>--- | 1,3 | C08L |
| D,A | DATABASE WPI<br>Section Ch, Week 8724<br>Derwent Publications Ltd., London, GB;<br>Class A26, AN 87-165771<br>& JP-A-62 096 551 ( TORAY IND INC) , 6.Mai 1987<br>* Zusammenfassung *<br>--- | 1 | |
| A | US-A-5 284 917 (N. YAMAMOTO ET AL.)<br>* Ansprüche 1,3-5 *<br>----- | 1 | |

Der vorliegende Recherchenbericht wurde für alle Patentansprüche erstellt

| Recherchenort | Abschlußdatum der Recherche | Prüfer |
|---|---|---|
| BERLIN | 20.März 1996 | Boeker, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)